# EUROPÄISCHE PATENTSCHRIFT

(11) **EP 2 651 686 B1**
(45) Veröffentlichungstag und Bekanntmachung des Hinweises auf die Patenterteilung: **17.08.2016**
(21) Anmeldenummer: 11788521.0
(22) Anmeldetag: 30.11.2011
(51) Int. Cl.: B60K 37/06, B60R 1/00

(54) **INFOTAINMENTSYSTEM**
INFOTAINMENT SYSTEM
SYSTÈME D'INFORMATION-DIVERTISSEMENT

(30) Priorität: 17.12.2010 DE 102010063367
(43) Veröffentlichungstag der Anmeldung: 23.10.2013
(73) Patentinhaber: Bayerische Motoren Werke Aktiengesellschaft, 80809 München (DE)
(72) Erfinder: ISELE, Robert, 82256 Fuerstenfeldbruck (DE); BAUR, Thilo, 86159 Augsburg (DE)
(74) Vertreter: Kammermeier, Peter Frank
(86) Internationale Anmeldenummer: PCT/EP2011/071371
(87) Internationale Veröffentlichungsnummer: WO 2012/079985

(56) Entgegenhaltungen:
- EP-A1- 1 932 710
- EP-A2- 0 771 686
- DE-U1-202005 021 350

## Beschreibung

Die Erfindung betrifft ein Infotainmentsystem.

Infotainmentsysteme werden regelmäßig in Kraftfahrzeugen verwendet, um beispielsweise eine Wiedergabe vorgegebener Infotainmentdaten auf einem Bildschirm zu ermöglichen. Dabei kann beispielsweise ein Bildschirm in einer Mittelkonsole oder in einem Armaturenbrett des Kraftfahrzeugs angeordnet sein und mittels des Infotainmentsystems zur Wiedergabe der Infotainmentdaten angesteuert werden.

Die Druckschrift EP 1 932 710 A1 offenbart ein Verfahren zur Darstellung von Informationen in einem Verkehrsmittel, bei dem die Informationen in Form von hierarchischen Menüstrukturen dargestellt werden. Bei dem Verfahren erfolgt die Darstellung stereoskopisch, wobei zumindest zwei verschiedene Menüs oder Menüpunkte für den Betrachter in verschiedenen Entfernungen dargestellt werden. Ein in der genannten Druckschrift offenbartes Kombiinstrument zeichnet sich dadurch aus, dass vor dem Display einer Anzeigeeinheit eine Maske angeordnet ist, welche die Lichtemission des von dem Display abgestrahlten Lichts so verändert, dass autostereoskopische Bilder darstellbar sind.

Die Aufgabe, die der Erfindung zugrunde liegt, ist es, ein Infotainmentsystem zu schaffen, das eine möglichst einfache und kostengünstige Wiedergabe von Infotainmentdaten ermöglicht.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch ein Infotainmentsystem, das eine Steuereinheit und eine Verarbeitungseinheit umfasst. Die Steuereinheit und die Verarbeitungseinheit sind mittels einer Datenverbindung miteinander gekoppelt. Die Verarbeitungseinheit ist ausgebildet, vorgegebene Infotainmentdaten, die in einem ersten Datenformat bereitstehen, zumindest teilweise in ein zweites, unkomprimiertes Datenformat umzusetzen und die umgesetzten Infotainmentdaten in dem zweiten, unkomprimierten Datenformat mittels der Datenverbindung der Steuereinheit zur Verfügung zu stellen. Die Steuereinheit ist ausgebildet, die Infotainmentdaten in dem zweiten, unkomprimierten Datenformat zu empfangen und die empfangenen Infotainmentdaten mit weiteren, vorgegebenen Infotainmentdaten, die in dem zweiten vorgegeben Datenformat bereitstehen, zusammenzuführen. Die Steuereinheit ist ferner ausgebildet, die zusammengeführten Infotainmentdaten zumindest teilweise für eine Wiedergabe auf zumindest einer der Steuereinheit zugeordneten Wiedergabeeinheit bereitzustellen.

Ein derartiges Infotainmentsystem hat den Vorteil, dass für eine Wiedergabe von Infotainmentdaten auf der zugeordneten Wiedergabeeinheit keine hochperformante Steuereinheit benötigt wird. Die Infotainmentdaten werden von der Verarbeitungseinheit bereits in dem zweiten, unkomprimierten Datenformat bereitgestellt. Die Infotainmentdaten in dem zweiten, unkomprimierten Datenformat eignen sich vorzugsweise bereits zu der Wiedergabe mittels der Wiedergabeeinheit. Eine Dekomprimierung und/oder Verarbeitung der Infotainmentdaten kann somit auf Seiten der Steuereinheit vorzugsweise entfallen. Es reicht somit vorzugsweise aus, wenn die Verarbeitungseinheit entsprechend leistungsfähig ausgebildet ist, die Umsetzung oder Konvertierung der vorgegebenen Infotainmentdaten in das zweite, unkomprimierte Datenformat auszuführen. Dadurch kann der Bedarf an hochperformanten Steuergeräten in dem Kraftfahrzeug reduziert werden, wodurch ein kostengünstiges Infotainmentsystem realisiert werden kann.

Die Verarbeitungseinheit kann mit weiteren Steuereinheiten gekoppelt sein und ausgebildet sein, den weiteren Steuereinheiten die Infotainmentdaten in dem zweiten, unkomprimierten Datenformat bereitzustellen. Dabei können identische oder unterschiedliche unkomprimierte Infotainmentdaten den jeweiligen Steuereinheiten bereitgestellt werden.

Die Verarbeitungseinheit und die Steuereinheit können jeweils als Baueinheit ausgebildet sein, die getrennt voneinander angeordnet sind. Das Infotainmentsystem ist vorzugsweise in einem Kraftfahrzeug angeordnet. Die Steuereinheit und die Verarbeitungseinheit können beispielsweise jeweils als Steuergerät ausgebildet sein und bilden jeweils getrennte Baueinheiten. Dabei können die Steuereinheit und die Verarbeitungseinheit verteilt angeordnet sein.

Die Datenverbindung ist ausgebildet, Infotainmentdaten in dem zweiten, unkomprimierten Datenformat mit einer ausreichenden Übertragungsgeschwindigkeit zwischen der Verarbeitungseinheit und Steuereinheit zu übertragen, so dass eine entsprechende Wiedergabe mittels einer Wiedergabeeinheit ermöglicht wird.

Das Zusammenführen der weiteren vorgegebenen Infotainmentdaten und der empfangenen Infotainmentdaten kann beispielsweise ein Hinzufügen der weiteren vorgegebenen Infotainmentdaten zu den von der Verarbeitungseinheit bereitgestellten Infotainmentdaten oder umgekehrt umfassen.

In einer vorteilhaften Ausgestaltung ist die Verarbeitungseinheit ausgebildet, zumindest teilweise die Infotainmentdaten in dem zweiten, unkomprimierten Datenformat für eine Wiedergabe auf zumindest einer der Verarbeitungseinheit zugeordneten weiteren Wiedergabeeinheit bereitzustellen. Dies ermöglicht eine Wiedergabe von Infotainment auf mehreren Wiedergabeeinheiten, wobei die auf den unterschiedlichen Wiedergabeeinheiten wiederzugebenden Infotainmentdaten vorzugsweise nur von der Verarbeitungseinheit entsprechend in das zweite, unkomprimierte Datenformat umgesetzt werden. Die den Wiedergabeeinheiten bereitgestellten Infotainmentdaten können dabei identisch oder unterschiedlich sein.

In einer weiteren vorteilhaften Ausgestaltung sind die der Verarbeitungseinheit vorgegebenen Infotainmentdaten, die in einem ersten Datenformat bereitstehen, als analoge Daten ausgebildet. Die vorgegebenen Infotainmentdaten können beispielsweise als Farb-Bild-Austast-Synchron-Signal bereitstehen. Die mittels der Verarbeitungseinheit umgesetzten Infotainmentdaten werden vorzugsweise als digitale Daten bereitgestellt. Alternativ können die der Verarbeitungseinheit vorgegebenen Infotainmentdaten, die in dem ersten Datenformat bereitstehen, als unkomprimierte oder komprimierte digitale Daten ausgebildet sein.

In einer weiteren vorteilhaften Ausgestaltung umfassen die vorgegebenen Infotainmentdaten Video- und/oder Audiodaten. Vorzugsweise umfassen die vorgegebenen Infotainmentdaten Videodaten. Alternativ oder zusätzlich können die Infotainmentdaten auch Audiodaten umfassen. Dies ermöglicht auf besonders einfache Weise, Video- und/oder Audiodaten als Infotainmentdaten der Steuereinheit bereitzustellen. Dabei ist die der Steuereinheit zugeordnete Wiedergabeeinheit vorzugsweise als Bildschirm und/oder Lautsprecher ausgebildet. Beispielsweise können die weiteren, vorgegebenen Infotainmentdaten der Steuereinheit eine Instrumentendarstellung des Kraftfahrzeugs repräsentieren, so z.B. Geschwindigkeits- und/oder Drehzahlanzeige. Die empfangenen Infotainmentdaten können beispielsweise eine Darstellung einer Navigationsanwendung repräsentieren. Mittels der Steuereinheit werden die empfangenen Infotainmentdaten in dem zweiten, unkomprimierten Datenformat mit den weiteren, vorgegebenen Infotainmentdaten zu einer gemeinsamen Darstellung zusammengeführt. Diese gemeinsame Darstellung kann auf der der Steuereinheit zugeordneten Wiedergabeeinheit, die beispielsweise einen Bildschirm in dem Armaturenbrett des Kraftfahrzeugs umfasst, als Instrumentenansicht mit integrierter Navigationsanwendung dargestellt werden. Dadurch kann besonders einfach eine Mischdarstellung von Infotainmentdaten unterschiedlicher Datenquellen realisiert werden.

In einer weiteren vorteilhaften Ausgestaltung sind die Verarbeitungseinheit und die Steuereinheit ausgebildet, mittels der Datenverbindung neben den Infotainmentdaten in dem zweiten, unkomprimierten Datenformat Steuerdaten auszutauschen. Mittels der Datenverbindung können die Steuerdaten vorzugsweise bidirektional zwischen den beiden Einheiten übertragen werden.

Ausführungsbeispiele der Erfindung sind anhand von Figuren näher erläutert. Es zeigen:
- Fig. 1: ein Darstellungssystem,
- Fig. 2: ein Wiedergabebeispiel.

Elemente gleicher Konstruktion oder Funktion sind figurenübergreifend mit den gleichen Bezugszeichen versehen.

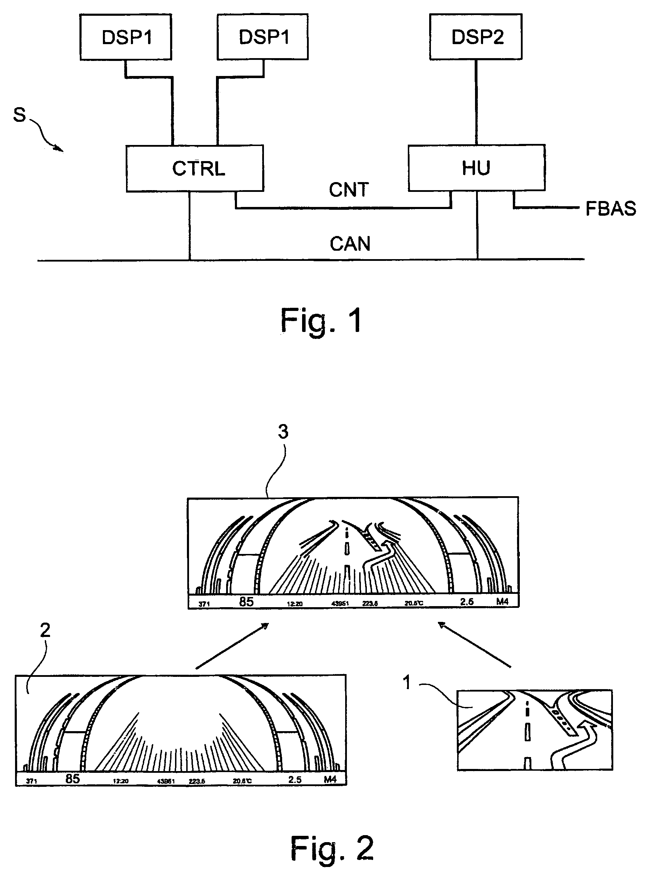

In Figur 1 ist ein Infotainmentsystem S dargestellt, das eine Verarbeitungseinheit HU und eine Steuereinheit CTRL umfasst.

Das Infotainmentsystem S ist vorzugsweise in einem Kraftfahrzeug angeordnet und ausgebildet, Insassen des Kraftfahrzeugs Infotainmentdaten, umfassend beispielsweise Video- und/oder Audiodaten, mittels einer vorgegebenen Benutzerschnittstelle zur Verfügung zu stellen.

Die Verarbeitungseinheit HU ist beispielsweise als eine Hauptsteuereinheit ausgebildet, die auch als Head-Unit bezeichnet werden kann. Die Verarbeitungseinheit HU umfasst vorzugsweise einen oder mehrere Prozessoren, so z.B. Grafikprozessoren, die vorzugsweise ausgebildet sind, die Infotainmentdaten zu verarbeiten. Die Steuereinheit CTRL ist beispielsweise als eine zu der Verarbeitungseinheit HU separate Baueinheit ausgebildet, so z.B. als Steuergerät für ein Armaturenbrett des Kraftfahrzeugs. Die Verarbeitungseinheit HU und die Steuereinheit CTRL sind dabei beispielsweise verteilt in dem Kraftfahrzeug angeordnet.

Die Steuereinheit CTRL ist mit einer ersten Wiedergabeeinheit DSP1 gekoppelt, die beispielsweise einen Bildschirm und/oder Lautsprecher umfasst. Die erste Wiedergabeeinheit DSP1 ist beispielsweise einer Instrumententafel eines Armaturenbrettes des Kraftfahrzeugs zugeordnet. Die Steuereinheit CTRL kann mit weiteren ersten Wiedergabeeinheiten DSP1 gekoppelt sein, so z.B. einem Frontsichtbildschirm, der auch als Head-Up-Display bezeichnet werden kann. Die Kopplung zwischen der Steuereinheit CTRL und der jeweiligen Wiedergabeeinheit DSP1 ist beispielsweise als digitale Multimedia-Schnittstelle, so z.B. als eine HDMI- oder DVI-Schnittstelle, ausgebildet. Grundsätzlich können auch andere, so z.B. analoge, Schnittstellen verwendet werden.

Die Verarbeitungseinheit HU kann mit zumindest einer zweiten Wiedergabeeinheit DSP2, so z.B. einem zentralen Bildschirm in einer Mittelkonsole des Kraftfahrzeugs, gekoppelt sein. Die Kopplung ist vorzugsweise analog zu der Kopplung zwischen Steuereinheit CTRL und der jeweiligen ersten Wiedergabeeinheit DSP1 ausgebildet. Die Verarbeitungseinheit HU ist vorzugsweise ausgebildet, vorgegebene Infotainmentdaten eines ersten Datenformats in Infotainmentdaten eines zweiten, unkomprimierten Datenformats umzusetzen. Dazu können die vorgegebenen Infotainmentdaten beispielsweise mittels eines analogen Signals FBAS, das beispielsweise als Farb-Bild-Austast-Synchron-Signal ausgebildet ist, eingangsseitig bereitgestellt werden. Alternativ können die vorgegebenen Infotainmentdaten auch entweder als unkomprimierte oder komprimierte Daten bereitgestellt werden. Auch kann die Verarbeitungseinheit HU zumindest einen Speicher umfassen, auf dem die vorgegebenen Infotainmentdaten gespeichert sind. Die vorgegebenen Infotainmentdaten umfassen beispielsweise Multimediadaten, so z.B. Videodaten. Grundsätzlich können die vorgegebenen Infotainmentdaten auch Audiodaten umfassen. Beispielsweise können die vorgegebenen Infotainmentdaten einer Navigationsanwendung zugeordnet sein und repräsentieren beispielsweise einen vorgegebenen Kartenoder Straßenabschnitt. Die Verarbeitungseinheit HU ist ausgebildet, so z.B. mittels des zumindest einen Grafikprozessors, die vorgegebenen Infotainmentdaten in dem ersten Datenformat ein Infotainmentdaten des zweiten, unkomprimierten Datenformats umzusetzen und bereitzustellen.

Die Verarbeitungseinheit HU ist mit der Steuereinheit CTRL mittels einer Datenverbindung CNT gekoppelt. Die Datenverbindung CNT ist ausgebildet, die Infotainmentdaten in dem zweiten, unkomprimierten Datenformat der Steuereinheit CTRL zur Verfügung zu stellen. Dabei ist die Datenverbindung CNT beispielsweise ausgebildet, die Infotainmentdaten mit einer besonders hohen Übertragungsgeschwindigkeit, so z.B. zwischen 500 und 3000 MBit/s, zumindest unidirektional über eine Entfernung von beispielsweise bis zu 12 m zur Steuereinheit CTRL zu übertragen. Dabei kann die Datenverbindung CNT ausgebildet sein, ein oder mehrere Kanäle zur Übertragung der Infotainmentdaten, insbesondere der Videodaten in dem zweiten, unkomprimierten Datenformat, bereitzustellen. Zusätzlich zu den Infotainmentdaten in dem zweiten, unkomprimierten Datenformat können auch Daten in komprimierter Form mittels der Datenverbindung CNT zwischen der Steuereinheit CTRL und Verarbeitungseinheit HU übertragen werden. Auch kann die Datenverbindung CNT ausgebildet sein, neben den Infotainmentdaten in dem zweiten, unkomprimierten Datenformat, Steuerdaten, so z.B. mittels Ethernet-Protokolls, bidirektional zwischen der Verarbeitungseinheit HU und der Steuereinheit CTRL zu übertragen. Beispielsweise können über diesen Steuerdatenkanal Handshake- und/oder Statusdaten als Steuerdaten übertragen werden.

Die Verarbeitungseinheit HU kann auch mit weiteren Steuereinheiten CTRL gekoppelt sein, die analog ausgebildet sind. Dabei kann die jeweilige Steuereinheit CTRL direkt mittels einer weiteren jeweiligen Datenverbindung CNT mit der Verarbeitungseinheit HU gekoppelt sein. Alternativ ist aber auch eine Kopplung zwischen den Steuereinheiten CTRL und der Verarbeitungseinheit HU im Sinne einer Reihenschaltung als so genannte Daisy-Chain-Kette möglich.

Die Steuereinheit CTRL ist ausgebildet, die von der Verarbeitungseinheit HU bereitgestellten Infotainmentdaten in dem zweiten, unkomprimierten Datenformat zu empfangen und mit weiteren vorgegebenen Infotainmentdaten, die vorzugsweise auch in dem zweiten, unkomprimierten Datenformat bereitstehen, zusammenzuführen. Die weiteren vorgegebenen Infotainmentdaten können beispielsweise in zumindest einem Speicher der Steuereinheit CTRL gespeichert sein. Dabei kann das Zusammenführen der Infotainmentdaten beispielsweise ein Hinzufügen der weiteren vorgegebenen Infotainmentdaten zu den von der Verarbeitungseinheit HU bereitgestellten Infotainmentdaten oder umgekehrt umfassen.

Die Steuereinheit CTRL und die Verarbeitungseinheit HU können ferner mit einem Datenkommunikationssystem CAN, so z.B. ein Controller-Area-Network System, gekoppelt sein, mittels dessen auch Steuerdaten übertragen werden können.

In Figur 2 sind drei Wiedergaben 1-3 dargestellt. Eine erste Wiedergabe 1 ist beispielsweise einer Navigationsanwendung zugeordnet und gibt eine Darstellung eines Straßenabschnitts wieder. Beispielsweise resultiert die erste Wiedergabe 1 aus Infotainmentdaten, die mittels der Verarbeitungseinheit HU in dem zweiten, unkomprimierten Datenformat der Steuereinheit CTRL bereitgestellt werden. Die weiteren vorgegebenen Infotainmentdaten der Steuereinheit CTRL repräsentieren beispielsweise eine Instrumentendarstellung, die in einer zweiten Wiedergabe 2 dargestellt ist, so z.B. Geschwindigkeits-, Drehzahlinstrumente. Dabei kann ein vorgegebener Bereich der Instrumentendarstellung beispielsweise für die Navigationsanwendung reserviert sein. Mittels des Zusammenführen der empfangenen und weiteren vorgegebenen Infotainmentdaten durch die Steuereinheit CTRL, wird dieser vorgegebene reservierte Bereich der Instrumentendarstellung durch die von der Verarbeitungseinheit bereitgestellten Infotainmentdaten ausgefüllt, so dass eine dritte Wiedergabe 3 resultiert, die als Gesamt- oder Mischdarstellung sowohl die Instrumentendarstellung als auch den Straßenabschnitt umfasst. Das Zusammenführen der Infotainmentdaten mittels der Steuereinheit CTRL kann beispielsweise mittels eines Layering- oder Texturing-Verfahrens erfolgen.

### Bezugszeichenliste

- 1-3: Wiedergabebeispiele
- CAN: Datenkommunikationssystem
- CNT: Datenverbindung
- CTRL: Steuereinheit
- DSP1, DSP2: Wiedergabeeinheit
- FBAS: analoges Signal
- HU: Verarbeitungseinheit
- S: Infotainmentsystem

## Patentansprüche

1. Infotainmentsystem (S) umfassend eine Steuereinheit (CTRL) und eine Verarbeitungseinheit (HU), wobei
- die Verarbeitungseinheit (HU) und die Steuereinheit (CTRL) mittels einer Datenverbindung (CNT) miteinander gekoppelt sind,
**dadurch gekennzeichnet, dass** die Verarbeitungseinheit (HU) ausgebildet ist, vorgegebene Infotainmentdaten, die in einem ersten Datenformat bereitstehen, zumindest teilweise in ein zweites, unkomprimiertes Datenformat umzusetzen und die umgesetzten Infotainmentdaten in dem zweiten, unkomprimierten Datenformat mittels der Datenverbindung (CNT) der Steuereinheit (CTRL) zur Verfügung zu stellen,
und dass die Steuereinheit (CTRL) ausgebildet ist, die Infotainmentdaten in dem zweiten, unkomprimierten Datenformat zu empfangen und diese mit weiteren, vorgegebenen Infotainmentdaten, die in dem zweiten vorgegeben Datenformat bereitstehen, zusammenzuführen und die zusammengeführten Infotainmentdaten zumindest teilweise für eine Wiedergabe auf zumindest einer der Steuereinheit (CTRL) zugeordneten Wiedergabeeinheit (DSP1) bereitzustellen.

2. Infotainmentsystem (S) nach Anspruch 1, bei dem die Verarbeitungseinheit (HU) und die Steuereinheit (CTRL) jeweils als getrennt voneinander angeordnete Baueinheiten ausgebildet sind.

3. Infotainmentsystem (S) nach Anspruch 1 oder 2, bei dem die Verarbeitungseinheit (HU) ausgebildet ist, zumindest teilweise die Infotainmentdaten in dem zweiten, unkomprimierten Datenformat für eine Wiedergabe auf zumindest einer der Verarbeitungseinheit (HU) zugeordneten weiteren Wiedergabeeinheit (DSP2) bereitzustellen.

4. Infotainmentsystem (S) nach einem der vorstehenden Ansprüche, bei dem die der Verarbeitungseinheit (HU) vorgegebenen Infotainmentdaten, die in einem ersten Datenformat bereitstehen, als analoge Daten ausgebildet sind.

5. Infotainmentsystem (S) nach einem der vorstehenden Ansprüche, bei dem die vorgegebenen Infotainmentdaten Video- und/oder Audiodaten umfassen.

6. Infotainmentsystem (S) nach einem der vorstehenden Ansprüche, bei dem die Verarbeitungseinheit (HU) und die Steuereinheit (CTRL) ausgebildet sind, mittels der Datenverbindung (CNT) neben den Infotainmentdaten in dem zweiten, unkomprimierten Datenformat Steuerdaten auszutauschen.

## Claims

1. An Infotainment system (S), comprising a control unit (CTRL) and a processing unit (HU), wherein
- the processing unit (HU) and the control unit (CTRL) are coupled together by a data connection (CNT),
**characterised in that** the processing unit (HU) is configured to convert preset infotainment data which are available in a first data format, at least partly into a second uncompressed data format and to make available the converted infotainment data in the second,
uncompressed data format to the control unit (CTRL) by means of the data connection (CNT)
and **in that** the control unit (CTRL) is configured to receive the infotainment data in the second uncompressed data format and to combine these data with further preset infotainment data which are available in the second preset data format and to provide the combined infotainment data at least partly for playback on at least one playback unit (DSPI) assigned to the control unit (CTRL).

2. An Infotainment system (S) according to claim 1, wherein the processing unit (HU) and the control unit (CTRL) are each configured as modular units which are arranged separately from one another.

3. An Infotainment system (S) according to claim 1 or claim 2, wherein the processing unit (HU) is configured to at least partly provide the infotainment data in the second uncompressed data format for playback on at least one further playback unit (DSP2) assigned to the processing unit (HU).

4. An Infotainment system (S) according to any one of the preceding claims, wherein the infotainment data which are preset in the processing unit (HU) and are available in a first data format are configured as analog data.

5. An Infotainment system (S) according to any one of the preceding claims, wherein the preset infotainment data comprise video data and/or audio data.

6. An Infotainment system (S) according to any one of the preceding claims, wherein the processing unit (HU) and the control unit (CTRL) are configured to exchange control data by means of the data connection (CNT) in addition to the infotainment data in the second uncompressed data format.

## Revendications

1. Système d'information-divertissement (S) comprenant une unité de commande (CTRL) et une unité de traitement (HU), dans lequel l'unité de traitement (HU) et l'unité de commande (CTRL) sont accouplées au moyen d'une connexion de données (CNT),
**caractérisé en ce que**
l'unité de traitement (HU) est réalisée pour transférer des données d'information-divertissement prédéfinies qui se présentent dans un premier format de données au moins partiellement dans un second format de données non comprimé, et pour mettre les données d'information-divertissement transformées dans le second format de données non comprimé à disposition de l'unité de commande (CTRL) par l'intermédiaire de la connexion de données (CNT), et
l'unité de commande (CTRL) est réalisée pour recevoir les données d'information-divertissement dans le second format de données non comprimé, rassembler celles-ci avec d'autres données d'information-divertissement prédéfinies qui sont mises à disposition dans le second format de données prédéfini, et fournir les données d'information-divertissement rassemblées au moins en partie pour permettre leur reproduction sur au moins une unité de reproduction (DSP1) associée à l'unité de commande (CTRL).

2. Système d'information-divertissement (S) conforme à la revendication 1, dans lequel l'unité de traitement (HU) et l'unité de commande (CTRL) sont respectivement réalisées sous la forme d'unités séparées l'une de l'autre.

3. Système d'information-divertissement (S) conforme à la revendication 1 ou 2, dans lequel l'unité de traitement (HU) est réalisée pour fournir au moins partiellement les données d'information-divertissement dans le second format de données non comprimé pour permettre leur reproduction sur au moins une autre unité de reproduction (DSP2) associée à l'unité de traitement (HU).

4. Système d'information-divertissement (S) conforme à l'une des revendications précédentes dans lequel les données d'information-divertissement prédéfinies de l'unité de traitement (HU) qui sont fournies dans un premier format de données sont réalisées sous la forme de données analogiques.

5. Système d'information-divertissement (S) conforme à l'une des revendications précédentes dans lequel les données d'information-divertissement prédéfinies comprennent des données vidéo et/ou des données audio.

6. Système d'information-divertissement (S) conforme à l'une des revendications précédentes dans lequel l'unité de traitement (HU) et l'unité de commande (CTRL) sont réalisées pour permettre d'échanger au moyen de la connexion de données (CNT) outre des données d'information-divertissement, des données de commande dans le second format de données non comprimé.
